# EUROPÄISCHE PATENTSCHRIFT

(11) **EP 2 049 378 B1**
(45) Veröffentlichungstag und Bekanntmachung des Hinweises auf die Patenterteilung: **18.06.2014**
(21) Anmeldenummer: 07786576.4
(22) Anmeldetag: 06.08.2007
(51) Int. Cl.: B60W 50/023, F02D 41/22, F02D 41/26, B60T 8/88

(54) **ANSTEUERSYSTEM FÜR EINE ANTRIEBSEINHEIT EINES KRAFTFAHRZEUGES**
ACTUATION SYSTEM FOR A DRIVE UNIT OF A MOTOR VEHICLE
SYSTÈME D'ASSERVISSEMENT POUR UNE UNITÉ D'ENTRAÎNEMENT D'UN VÉHICULE AUTOMOBILE

(30) Priorität: 09.08.2006 DE 102006037125
(43) Veröffentlichungstag der Anmeldung: 22.04.2009
(73) Patentinhaber: Daimler AG, 70327 Stuttgart (DE)
(72) Erfinder: FUCHS, Detlef, 71638 Ludwigsburg (DE); REHM, Lothar, 71083 Herrenberg (DE); VON RAUMER, Thomas, 70565 Stuttgart (DE)
(74) Vertreter: JENSEN & SON
(86) Internationale Anmeldenummer: PCT/EP2007/006930
(87) Internationale Veröffentlichungsnummer: WO 2008/017441

(56) Entgegenhaltungen:
- EP-A- 0 754 611
- EP-A- 1 231 121
- WO-A-01/43360
- DE-A1- 10 240 669
- DE-A1- 10 359 875
- DE-A1- 19 510 525
- DE-A1- 19 645 944
- DE-A1- 19 832 167

## Beschreibung

Die Erfindung betrifft ein Ansteuersystem für eine Antriebseinheit eines Kraftfahrzeuges nach dem Oberbegriff des Anspruchs 1.

Die Überwachung von Steuereinheiten eines Ansteuersystems einer Antriebseinheit ist im Allgemeinen als Drei-Ebenen-Überwachungskonzept ausgeführt. Ein derartiges Überwachungskonzept ist aus der Druckschrift DE 44 38 714 A1 bekannt. Sie beschreibt ein Verfahren und eine Vorrichtung zur Steuerung der Antriebsleistung eines Fahrzeuges mit einem Mikrocomputer mit wenigstens zwei voneinander unabhängigen Ebenen, wobei eine erste Ebene die Steuerfunktionen und eine zweite Ebene die Überwachungsfunktionen durchführt. Eine dritte Ebene bildet eine Kontrollebene, welche die Überwachungsebene und damit den Mikrocomputer kontrolliert.

Ein weiteres Beispiel für redundant ausgeführtes Ansteuersystem für Kraftfahrzeug ist aus EP 0 754 611 A1 bekannt.

Aufgabe der Erfindung ist es, ein Ansteuersystem mit hoher Verfügbarkeit darzustellen.

Diese Aufgabe wird erfindungsgemäß durch die Merkmale des Anspruchs 1 gelöst.

Erfindungsgemäß wird die Aufgabe dadurch gelöst, dass die Antriebs-Steuereinheit eine zweite Datenübertragungseinrichtung aufweist, und zusätzlich über einen zweiten Kommunikationsweg mit der externen Steuereinheit verbunden ist, wobei die Sollmomentvorgabe von der externen Steuereinheit über den zweiten Kommunikationsweg an die zweite Datenübertragungseinrichtung weitergebbar ist.

Dies hat den Vorteil, dass bei einem Ausfall eines der Kommunikationswege noch ein zweiter Kommunikationsweg zur Datenübertragung zur Verfügung steht. Das erhöht die Verfügbarkeit des Ansteuersystems.

In einer Ausführungsform sind bei Erkennen eines Fehlers in der Datenübertragung einer Datenübertragungseinrichtung mittels der Antriebs-Steuereinheit und bei Vorliegen des Fehlers kürzer als eine vorgegebene Zeitdauer die letzten fehlerfreien Daten dieser Datenübertragungseinrichtung beibehaltbar. Änderungen in den Sollvorgaben erfolgen üblicherweise nicht unstetig. Daher stellt es für kurze Unterbrechungen eine gute Näherung eines fehlenden Wertes da, den alten Wert beizubehalten. Damit können Kurzzeitfehler kompensiert werden ohne auf die Daten des anderen Kommunikationsweges zurückzugreifen.

In einer Ausführungsform sind bei Erkennen eines Fehlers in der Datenübertragung einer Datenübertragungseinrichtung mittels der Antriebs-Steuereinheit die Daten der jeweils anderen Datenübertragungseinrichtung übernehmbar, wenn der Fehler länger als eine vorgegebene Zeitdauer vorliegt. Da in beiden Datenübertragungseinrichtung die gleichen Daten übertragen Werten sind die fehlerhaft übertragene Daten einer Datenübertragungseinrichtung durch die Daten der jeweils anderen Datenübertragungseinrichtung ersetzbar. Damit ist die Datenqualität auch bei einem Ausfall einer der Datenübertragungseinrichtungen sichergestellt.

In einer Ausführungsform ist bei Erkennen eines Fehlers in der Datenübertragung beider Datenübertragungseinrichtung mittels der Antriebs-Steuereinheit, ein Sollmoment mit dem Wert Null vorgebbar, wenn der Fehler länger als die vorgegebene Zeitdauer vorliegt. Damit wird sichergestellt, dass die Antriebseinheit in einem zulässigen und sicheren Zustand betrieben wird.

In einer Ausführungsform ist ein Fehlersignal in der Antriebs-Steuereinheit speicherbar. Damit ist es möglich den Fehler an den Fahrer zu signalisieren und/oder im Rahmen einer externen Diagnose durch Wartungspersonal zu erkennen und zu beheben.

In einer Ausführungsform ist dieser Zustand bis zum nächsten Neustart des Antriebs beibehaltbar. Damit ist es möglich bei andauernd auftretenden Fehlern das System dauerhaft bis zum nächsten Neustart in einem sicheren Zustand zu betreiben und den Fehler zu signalisieren. Damit wird vermieden, dass sich ein undefinierter Zustand einstellt.

In einer Ausführungsform ist jedem der beiden Kommunikationswege eine eigene Identitätskennung zuordenbar ist, aufgrund derer erkennbar ist, über welchen Kommunikationsweg ein Sollmoment der Steuereinheit übertragen wurde. Damit kann den Daten zugeordnet werden, über welchen Kommunikationsweg sie der Steuereinheit zugeführt wurden. Dies erleichtert die spätere Auswertung.

In einer Ausführungsform ist über beide Kommunikationswege das gleiche Sollmoment mit einer gleichen Botschaftsfrequenz an die jeweils zugeordnete Datenübertragungseinrichtung übertragbar. Dies erleichtert den synchronisierten Abgleich der Daten der beiden Kommunikationswege und die Fehlererkennung.

In einer Ausführungsform ist über beide Kommunikationswege das gleiche Sollmoment mit einem gleichen Botschaftszähler und mit einer gleichen Prüfsumme an die jeweils zugeordnete Datenübertragungseinrichtung übertragbar. Dies erleichtert ebenfalls den synchronisierten Abgleich der Daten der beiden Kommunikationswege und verbessert die Fehlererkennung.

In einer Ausführungsform ist die zweite Datenübertragungseinrichtung in der Funktionsüberwachungsebene angeordnet ist. Damit ist es möglich die Datenübertragung fortzusetzen, selbst wenn eine der Ebenen, die Funktionsebene oder die Funktionsüberwachungsebene einen Fehler in der Datenübertragung aufweist.

In einer Ausführungsform ist die Daten der beiden Datenübertragungseinrichtungen parallel zueinander durch die Antriebs-Steuereinheit auswertbar sind. Damit ist es möglich die Datenübertragung fortzusetzen, selbst wenn eine der Ebenen, die Funktionsebene oder die Funktionsüberwachungsebene fehlerhaft arbeitet.

Weitere Vorteile und Ausgestaltungen gehen aus den Unteransprüchen und den Beschreibungen hervor. Dabei zeigt die Fig. eine Ausführungsform des erfindungsgemäßen Ansteuersystems.

Alle in der Fig. dargestellten Einrichtungen und sonstigen Bauteile der Steuereinheit können gleichermaßen als elektronisches Bauteil als Funktionalität oder Speicherbereich eines Rechnerbausteins, als Software oder Vergleichbares ausgeführt sein.

Die Fig. zeigt eine Antriebs-Steuereinheit 1 einer Antriebseinheit und eine zweite separate externe Steuereinheit 2.

In der Fig. ist eine Antriebs-Steuereinheit 1 dargestellt, die einer nicht dargestellten Antriebseinheit zugeordnet ist. Die Antriebseinheit wird von dieser Antriebs-Steuereinheit 1 gesteuert. Die Antriebseinheit kann beispielsweise als elektrische Maschine, als Brennkraftmaschine oder dergleichen sein.

Die Antriebs-Steuereinheit 1 weist eine Funktionsebene 3 und eine Funktionsüberwachungsebene 4 auf. Die Fig. zeigt des Weiteren eine zweite externe Steuereinheit 2. Diese kann beispielsweise eine zentrale Antriebs-Steuereinheit zur Koordinierung mehrerer Antriebseinheiten (Hybrid-Steuereinheit), die Fahrzeugsteuereinheit oder die Steuereinheit einer Brennkraftmaschine sein.

Diese externe Steuereinheit 2 ist über zwei Kommunikationswege A und B mit der Antriebs-Steuereinheit 1 verbunden.

Die Antriebs-Steuereinheit 1 weist zwei Datenübertragungseinheiten 5 und 6 auf. Die Datenübertragungseinheit 5 ist in der Funktionsebene 3 angeordnet. Die Datenübertragungseinheit 6 ist in der Funktionsüberwachungsebene 4 angeordnet. Der Kommunikationsweg A verbindet die externe Steuereinheit 2 mit der Datenübertragungseinheit 5 der Funktionsebene 3 der Antriebs-Steuereinheit 1. Der Kommunikationsweg B verbindet die externe Steuereinheit 2 mit der Datenübertragungseinheit 6 der Funktionsüberwachungsebene 4 der Antriebs-Steuereinheit 1.

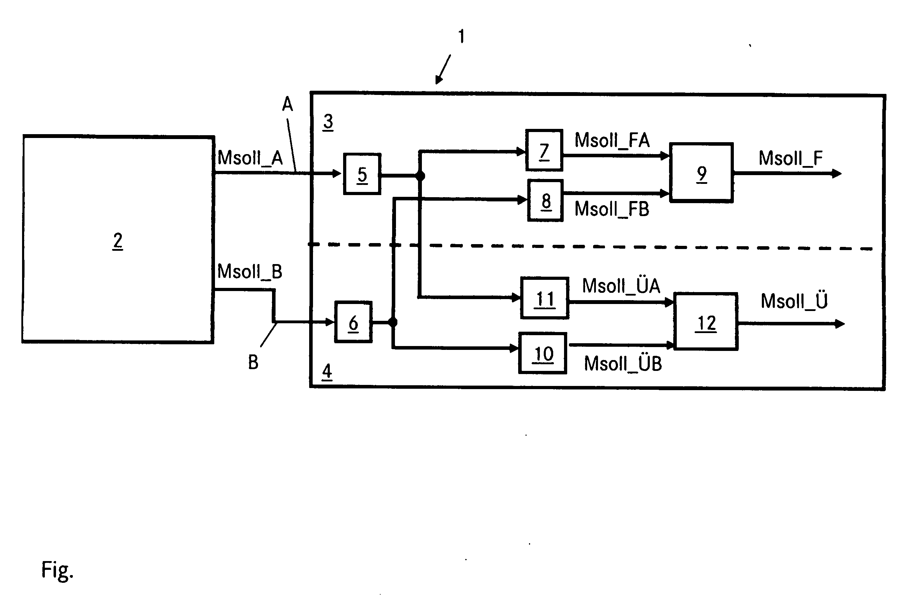

Über die Kommunikationswege A und B gibt die externe Steuereinheit 2 ein Sollmoment Msoll an die Antriebs-Steuereinheit 1 der Antriebseinheit. Dabei wird von den Kommunikationswegen A und B das identische Sollmoment Msoll übertragen. Dabei wird dem übertragenen Sollmoment Msoll die Information beigefügt, über welchen der Kommunikationswege A oder B es übertragen wurde. Entsprechend ist in der Fig.1 das Sollmoment mit Msoll_A bzw. Msoll_B gekennzeichnet.

Die Übertragung des Sollmoments Msoll erfolgt auf den beiden Kommunikationswegen A und B mit der gleichen Taktfrequenz, und unter Zuordnung des gleichen Botschaftszählers. Dabei ist dem Sollmoment Msoll_A bzw. Msoll_B jeweils eine Prüfsumme zugeordnet. Damit können zeitgleich auf den Kommunikationswegen A und B parallel übertragene identische Werte für das Sollmoment Msoll anhand der Übereinstimmung des Botschaftszählers und der Gleichheit der Prüfsummen einander zugeordnet werden.

Von der Datenübertragungseinrichtung 5 wird das über den Kommunikationsweg A übertragene Sollmoment Msoll_A an eine Einrichtung 7 der Funktionsebene 3 und eine Einrichtung 11 der Funktionsüberwachungsebene 4 weitergegeben.

Von der Datenübertragungseinrichtung 6 wird das über den Kommunikationsweg B übertragene Sollmoment Msoll_B an eine Einrichtung 8 der Funktionsebene 3 und eine Einrichtung 10 der Funktionsüberwachungsebene 4 weitergegeben.

In einer Einrichtung 9 der Funktionsebene 3 werden die Daten der Einrichtung 7 und der Einrichtung 8 miteinander verglichen. Dabei wird geprüft, ob die Daten von Kommunikationsweg A und Kommunikationsweg B die gleiche Aktualität besitzen. Dies ist dann der Fall, wenn der Botschaftszähler der Daten von Kommunikationsweg A und der Daten von Kommunikationsweg B den gleichen Wert hat. Außerdem wird geprüft, ob jeweils die Prüfsumme richtig ist und mit der der Daten des anderen Kommunikationsweges übereinstimmt. Anschließend erfolgt die Ermittlung des von der Einrichtung 9 der Funktionsebene 3 auszugebenden Sollmoments Msoll_F.

Es wird ein Fehler erkannt, wenn eine Botschaft verloren wurde, die Prüfsumme fehlerhaft ist, ein Fehler im Botschaftszähler erkannt wurde (Wert des Botschaftszählers ist gleich dem der letzten Botschaft oder um mehr als eins größer). Verlorene Botschaften führen zu einer reversiblen Fehlerreaktion, ein Fehler in der Prüfsumme oder im Botschaftszähler führen zum einer irreversiblen Reaktion, die bis zum nächsten Motorstart aufrechterhalten wird.

Die Momentenermittlung in der Funktionsebene 3 ist in der nachfolgenden Tabelle dargestellt:

| **Fehler in A ?** | **Fehler in B ?** | **Msoll_FA** | **Msoll_FB** | **Msoll_F** |
|---|---|---|---|---|
| nein | nein | positiv | positiv | Min [Msoll_FA, Msoll_FB] |
| nein | nein | negativ | negativ | Max [Msoll_FA, Msoll_FB] |
| nein | nein | positiv | negativ | Null |
| nein | nein | negativ | positiv | Null |
| nein | ja | egal | Fehler | Msoll_FA (Fehlersignal für Msoll_FB) |
| ja | nein | Fehler | egal | Msoll_FB (Fehlersignal für Msoll_FA) |
| ja | ja | Fehler | Fehler | Null |

Liegen keine Übertragungsfehler in Kommunikationsweg A oder B vor und haben die beiden Sollmomente Msoll_FA und Msoll_A das gleiche Vorzeichen, so gibt die Einrichtung 9 den niedrigeren der beiden Werte aus. Sind beide Werte positiv, so entspricht dies dem Minimum Min[Msoll_FA, Msoll_FB] aus den Werten für das Sollmoment. Sind beide Werte negativ, so entspricht dies dem Maximum Max[Msoll_FA, Msoll_FB] aus den Werten für das Sollmoment.

Liegt kein Übertragungsfehler vor, aber die beiden Sollmomente Msoll_FA und Msoll_A haben ein unterschiedliches Vorzeichen, so gibt die Einrichtung 9 ein Sollmoment Msoll_F mit dem Wert Null aus.

Liegt ein Übertragungsfehler in einem der Kommunikationswege A oder B vor, so übernimmt die Einrichtung 9 bzw. die ihr vorgelagerte Einrichtung 7 bzw. 8 den letzten fehlerfrei übertragenen Wert des betroffenen Kommunikationsweges A bzw. B, wenn der Fehler nicht länger als eine als festgelegte Zeitdauer (Entprellzeit) andauert.

Liegt ein Übertragungsfehler in einem der Kommunikationswege A oder B vor, der über diese festgelegte Entprellzeit hinaus fortbesteht, so gibt die Einrichtung 9 das Sollmoment Msoll_A bzw. Msoll_FA des anderen, fehlerfreien Kommunikationsweges B bzw. A als Sollmoment Msoll_F aus.

Liegt ein Übertragungsfehler in beiden Kommunikationswegen A und B vor, so gibt die Einrichtung 9 ein Sollmoment Msoll_F mit dem Wert Null aus.

In einer Einrichtung 12 der Funktionsüberwachungsebene 4 werden die Daten der Einrichtung 10 und der Einrichtung 11 miteinander verglichen. Dabei wird anhand der Botschaftszähler geprüft, ob die Daten von Kommunikationsweg A und Kommunikationsweg B die gleiche Aktualität besitzen. Außerdem wird geprüft, ob die Prüfsummen richtig sind und übereinstimmen.

Die Momentenermittlung in der Funktionsüberwachungsebene 4 entspricht der in der Funktionsebene 3 und wird daher nicht nochmals im Detail erläutert.

Auf diese Weise werden die beiden Kommunikationswege A und B in der Funktionsebene 3 und der Funktionsüberwachungsebene 4 parallel zueinander ausgewertet. Dies erhöht sowohl die Fehlererkennung als auch die Möglichkeiten einen Fehler zu kompensieren.

## Patentansprüche

1. Ansteuersystem für eine Kraftfahrzeug-Antriebseinheit eines, mit einer der Antriebseinheit zugeordneten Antriebs-Steuereinheit (1), die:
- eine Funktionsebene (3) und eine Funktionsüberwachungsebene (4) aufweist,
- eine in der Funktionsebene (3) angeordnete erste Datenübertragungseinrichtung (5) aufweist und
- mit einer separaten externen Steuereinheit (2) über einen ersten Kommunikationsweg (A) verbunden ist, über den eine Sollmomentvorgabe (Msoll_A) von der externen Steuereinheit (2) an die erste Datenübertragungseinrichtung (5) weitergebbar ist,
**dadurch gekennzeichnet, dass**
die Antriebs-Steuereinheit (1):
- eine zweite Datenübertragungseinrichtung (6) aufweist, und ,
- zusätzlich über einen zweiten Kommunikationsweg (B) mit der externen Steuereinheit (2) verbunden ist, wobei die Sollmomentvorgabe (Msoll_B) von der externen Steuereinheit (2) über den zweiten Kommunikationsweg an die zweite Datenübertragungseinrichtung (5) weitergebbar ist, und
- das Sollmoment (Msoll_B) von der Datenübertragungseinrichtung (6) an eine Einrichtung (8) der Funktionsebene (3) weitergegeben wird.

2. Ansteuersystem nach Anspruch 1,
**dadurch gekennzeichnet, dass**
das Sollmoment (Msoll_A) von der Datenübertragungseinrichtung (5) an eine Einrichtung (11) der Funktionüberwachungssebene (4) weitergegeben wird.

3. Ansteuersystem nach Anspruch 1 oder 2,
**dadurch gekennzeichnet, dass**
brei Erkennen eines Fehlers in der Datenübertragung einer Datenübertragungseinrichtung (5; 6) mittels der Antriebs-Steuereinheit (1) und bei Vorliegen des Fehlers kürzer als eine vorgegebene; Zeitdauer (T_Grenz) die letzten fehlerfreien Daten dieser Datenübertragungseinrichtung (5; 6) beibehaltbar sind.

4. Ansteuersystem nach Anspruch 1 oder 2,
**dadurch gekennzeichnet, dass**
bei Erkennen eines Fehlers in der Datenübertragung einer Datenübertragungseinrichtung (5; 6) mittels der Antriebs-Steuereinheit (1) die Daten der jeweils anderen Datenübertragungseinrichtung (6; 5) übernehmbar sind, wenn der Fehler länger als eine vorgegebene Zeitdauer (T_Grenz) vorliegt.

5. Ansteuersystem nach Anspruch 4,
**dadurch gekennzeichnet, dass**
bei Erkennen eines Fehlers in der Datenübertragung beider Datenübertragungseinrichtung (5, 6) mittels der Antriebs-Steuereinheit (1), ein Sollmoment mit dem Wert Null vorgebbar ist, wenn der Fehler länger als die vorgegebene Zeitdauer (T_Grenz) vorliegt.

6. Ansteuersystem nach Anspruch 4 oder 5,
**dadurch gekennzeichnet, dass**
ein Fehlersignal in der Antriebs-Steuereinheit (1) speicherbar ist.

7. Ansteuersystem nach Anspruch 5 oder 6,
**dadurch gekennzeichnet, dass**
dieser Zustand bis zum nächsten Neustart des Antriebs beibehaltbar ist.

8. Ansteuersystem nach Anspruch 1 oder 2
**dadurch gekennzeichnet, dass**
jedem der beiden Kommunikationswege (A, B) eine eigene Identitätskennung zuordenbar ist, aufgrund derer erkennbar ist, über welchen Kommunikationsweg ein Sollmoment der Steuereinheit (1) übertragen wurde.

9. Ansteuersystem nach Anspruch 1 oder 2,
**dadurch gekennzeichnet, dass**
über beide Kommunikationswege (A, B) das gleiche Sollmoment (Msoll_A, Msoll_B) mit einer gleichen Botschaftsfrequenz an die jeweils zugeordnete Datenübertragungseinrichtung (5, 6) übertragbar ist.

10. Ansteuersystem nach Anspruch 1 oder 2,
**dadurch gekennzeichnet, dass**
über beide Kommunikationswege (A, B) das gleiche Sollmoment (Msoll_A, Msoll_B) mit einem gleichen Botschaftszähler und mit einer gleichen Prüfsumme an die jeweils zugeordnete Datenübertragungseinrichtung (5; 6) übertragbar ist.

11. Ansteuersystem nach Anspruch 1 oder 2,
**dadurch gekennzeichnet, dass**
die zweite Datenübertragungseinrichtung (6) in der Funktionsüberwachungsebene (4) angeordnet ist.

12. Ansteuersystem nach Anspruch 1 oder 2,
**dadurch gekennzeichnet, dass**
die Daten der beiden Datenübertragungseinrichtungen (5, 6) parallel zueinander durch die Antriebs-Steuereinheit (1) auswertbar sind.

13. Ansteuersystem nach Anspruch 1 oder 2,
**dadurch gekennzeichnet, dass**
mindestens eine Antriebseinheit vorgesehen ist, die als elektrische Maschine oder Brennkraftmaschine ausgebildet ist.

## Claims

1. Actuation system for a motor vehicle drive unit of a drive control unit (1), assigned to the drive unit,
- having a function level (3) and a function monitoring level (4),
- having a first data transmission device (5) arranged in the function level (3) and
- being connected to a separate external control unit (2) via a first communication path (A), by which a predefined setpoint torque (Msoll_A) can be forwarded from the external control unit (2) to the first data transmission device (5),
**characterised in that**
the drive control unit (1) has:
- a second data transmission device (6), and
- is additionally connected via a second communication path (B) to the external control unit (2), wherein the predefined setpoint torque (Msoll_B) can be forwarded from the external control unit (2) via the second communication path to the second data transmission device (5), and
- the setpoint torque (Msoll_B) is forwarded by the data transmission device (6) to a device (8) of the function level (3).

2. Actuation system according to claim 1,
**characterised in that**
the setpoint torque (Msoll_A) is forwarded by the data transmission device (5) to a device (11) of the function monitoring level (4).

3. Actuation system according to claim 1 or 2,
**characterised in that**
upon detection of a fault in the data transmission of a data transmission device (5, 6) by means of the drive control unit (1) and upon presence of the fault for a shorter period than a predefined time period (T_Grenz), the last fault-free data of this data transmission device (5; 6) can be retained.

4. Actuation system according to claim 1 or 2,
**characterised in that**
upon detection of a fault in the data transmission of a data transmission device (5; 6) by means of the drive control unit (1) the data of the other respective data transmission device (6; 5) can be incorporated if the fault is present for longer than a predefined time period (T_Grenz).

5. Actuation system according to claim 4,
**characterised in that**
upon detection of a fault in the data transmission of the two data transmission devices (5, 6) by means of the drive control unit (1), a setpoint torque with the value zero can be predefined if the fault is present for longer than the predefined time period (T_Grenz).

6. Actuation system according to claim 4 or 5,
**characterised in that**
a fault signal can be stored in the drive control unit (1).

7. Actuation system according to claim 5 or 6,
**characterised in that**
this status can be retained until the next re-start of the drive.

8. Actuation system according to claim 1 or 2,
**characterised in that**
a separate identifier can be assigned to each of the two communication paths (A, B), by which it is possible to determine the communication path via which a setpoint torque of the control unit (1) has been transmitted.

9. Actuation system according to claim 1 or 2,
**characterised in that**
the same setpoint torque (Msol_ A, Msoll_B) can be transmitted with the same message frequency to the respectively assigned data transmission device (5, 6).

10. Actuation system according to claim 1 or 2,
**characterised in that**
the same setpoint torque (Msoll_A, Msoll_B) can be transmitted with the same message counter and the same checksum to the respectively assigned data transmission device (5; 6) via both communication paths (A, B).

11. Actuation system according to claim 1 or 2,
**characterised in that**
the second data transmission device (6) is arranged in the function monitoring level (4).

12. Actuation system according to claim 1 or 2,
**characterised in that**
the data of the two data transmission devices (5, 6) can be evaluated in parallel with each other by the drive control unit (1).

13. Actuation system according to claim 1 or 2,
**characterised in that**
at least one drive unit is present which is formed as an electric machine or an internal combustion engine.

## Revendications

1. Système de commande pour une unité d'entraînement de véhicule automobile, comportant une unité de commande d'entraînement (1) associée à l'unité d'entraînement, qui présente un niveau de fonctionnement (3), un niveau de surveillance de fonctionnement (4) et un premier dispositif de transmission de données (5) disposé dans le niveau de fonctionnement (3) et qui est reliée à une unité de commande externe séparée (2) par une première voie de communication (A), qui permet de transmettre une prescription de couple de consigne (Msoll_A) de l'unité de commande externe (2) au premier dispositif de transmission de données (5), **caractérisé en ce que** l'unité de commande d'entraînement (1) présente un second dispositif de transmission de données (6) et est en outre reliée par l'intermédiaire d'une seconde voie de communication (B) à l'unité de commande (2) externe , la prescription de couple de consigne (Msoll_B) de l'unité de commande externe (2) pouvant être transmise par l'intermédiaire de la seconde voie de communication au second dispositif de transmission de données (5) et le couple de consigne (Msoll_B) pouvant être transmis par l'unité de transmission de données (6) à un dispositif (8) du niveau fonctionnel (3).

2. Système de commande selon la revendication 1, **caractérisé en ce que** le couple de consigne (Msoll_A) peut être transmis par le dispositif de transmission de données (5) à un dispositif (11) du niveau de surveillance de fonctionnement (4).

3. Système de commande selon la revendication 1 ou 2, **caractérisé en ce qu'**en cas de reconnaissance d'un défaut dans la transmission de données d'un dispositif de transmission de données (5, 6) par l'intermédiaire de l'unité de commande d'entraînement (1) et si la présence du défaut est plus courte qu'une durée de temps définie (T_Grenz) les dernières données exemptes de défaut de ladite unité de transmission de données (5, 6) peuvent être conservées.

4. Système de commande selon la revendication 1 ou 2, **caractérisé en ce que** en cas de reconnaissance d'un défaut dans la transmission de données d'un dispositif de transmission de données (5, 6) par l'intermédiaire de l'unité de commande d'entraînement (1) les données de l'autre dispositif de transmission de données (5, 6) peuvent être reprises si le défaut existant est plus long que la durée de temps définie (T_Grenz).

5. Système de commande selon la revendication 4, **caractérisé en ce qu'**en cas de reconnaissance d'un défaut dans la transmission de données des deux dispositifs de transmission de données (5, 6) par l'intermédiaire de l'unité de commande d'entraînement (1), un couple de consigne peut être affecté à la valeur zéro si le défaut existant est plus long que la durée de temps définie (T_Grenz).

6. Unité de commande selon les revendications 4 ou 5, **caractérisée en ce qu'**un signal de défaut peut être enregistré dans l'unité de commande d'entraînement (1).

7. Unité de commande selon les revendications 5 ou 6, **caractérisée en ce que** cet état peut être conservé jusqu'au prochain redémarrage de l'entraînement.

8. Système de commande selon les revendications 1 ou 2, **caractérisé en ce qu'**à chacune des deux voies de communication (A, B) peut être attribuée une reconnaissance d'identité, laquelle permet de reconnaître la voie de communication qui a transmis le couple de consigne de l'unité de commande (1).

9. Système de commande selon les revendications 1 ou 2, **caractérisé en ce que** par l'intermédiaire des deux voies de communication (A, B) le couple de consigne identique (Msoll_A, Msoll_B) ayant une fréquence de message identique peut être transmise à chacun des dispositifs de transmission de données (5, 6) attribués.

10. Système de commande selon les revendications 1 ou 2, **caractérisé en ce que** par l'intermédiaire des deux voies de communication (A, B) le couple de consigne identique (Msoll_A, Msoll_B) ayant un compteur de message identique et une somme de contrôle identique peut être transmis à chacun des dispositifs de transmission de données (5, 6) attribués.

11. Système de commande selon la revendication 1 ou 2, **caractérisé en ce que** le second dispositif de transmission de données (6) est aménagé dans le niveau de surveillance de fonctionnement (4).

12. Système de commande selon les revendications 1 ou 2, **caractérisée en ce que** les données des deux dispositifs de transmission de données (5, 6) peuvent être exploitées en parallèle les unes aves les autres au moyen de l'unité de commande d'entraînement (1).

13. Système de commande selon les revendications 1 ou 2, **caractérisé en ce qu'**au moins une unité d'entraînement est conçue en tant que machine électrique ou moteur à combustion interne.
